# EUROPÄISCHE PATENTSCHRIFT

(11) **EP 3 589 003 B1**
(45) Veröffentlichungstag und Bekanntmachung des Hinweises auf die Patenterteilung: **20.01.2021**
(21) Anmeldenummer: 19173053.0
(22) Anmeldetag: 07.05.2019
(51) Int. Cl.: H04W 12/10, G06F 21/64, H04L 29/06

(54) **VERFAHREN ZUM SICHEREN ÜBERTRAGEN VON BILDDATEN UND SICHERER OPTOELEKTRONISCHER SENSOR**
METHOD FOR SECURE TRANSMISSION OF IMAGE DATA AND SECURE OPTOELECTRONIC SENSOR
PROCÉDÉ DE TRANSMISSION SÛRE DE DONNÉES D'IMAGE ET CAPTEUR OPTOÉLECTRONIQUE SÛRE

(30) Priorität: 25.06.2018 DE 102018115233
(43) Veröffentlichungstag der Anmeldung: 01.01.2020
(73) Patentinhaber: SICK AG, 79183 Waldkirch (DE)
(72) Erfinder: Müller, Lars, 79108 Freiburg (DE); Neubauer, Dr. Matthias, 79102 Freiburg (DE); Maier, Christoph, 79286 Glottertal (DE)

(56) Entgegenhaltungen:
- US-A1- 2009 254 530
- US-A1- 2014 314 235
- US-A1- 2015 377 413

## Beschreibung

Die Erfindung betrifft ein Verfahren zum Übertragen von Bilddaten in einem Sicherheitssensor oder Sicherheitssystem, bei dem Übertragungsfehler erkannt werden, sowie einen sicheren optoelektronischen Sensor, der das Verfahren intern nutzt, insbesondere eine 3D-Kamera.

Das primäre Ziel der Sicherheitstechnik ist, Personen vor Gefahrenquellen zu schützen, wie sie beispielsweise Maschinen im industriellen Umfeld darstellen. Die Maschine wird mit Hilfe von Sensoren überwacht, und wenn demnach eine Situation vorliegt, in der eine Person gefährlich nahe an die Maschine zu gelangen droht, wird eine geeignete Absicherungsmaßnahme ergriffen.

Für die Überwachung werden unter anderem 3D-Sensoren eingesetzt. Dazu zählen zunächst 3D-Kameras in unterschiedlichen Technologien, beispielsweise Stereoskopie, Triangulation, Lichtlaufzeit oder Auswertung der Störung passiver zweidimensionaler Muster oder von projizierten Beleuchtungsmustern. Solche 3D-Sensoren nehmen im Gegensatz zu einer üblichen zweidimensionalen Kamera Bilder auf, die in ihren Pixeln einen Abstandswert enthalten. Diese tiefenaufgelösten oder dreidimensionalen Bilddaten werden auch als Tiefenkarte bezeichnet. Weiterhin bekannt sind in zwei oder allen drei Richtungen abtastende Laserscanner, die über die jeweiligen Abtastwinkel und die gemessene Entfernung ebenfalls dreidimensionale Bilddaten erfassen. Der im Vergleich zu einer zweidimensionalen Bilderfassung höhere Geräte- und Auswertungsaufwand zur Erzeugung von dreidimensionalen Bilddaten wird in vielen Anwendungen durch die Zusatzinformationen gerechtfertigt.

In der Sicherheitstechnik beziehungsweise für den Personenschutz eingesetzte Sensoren müssen besonders zuverlässig arbeiten und deshalb hohe Sicherheitsanforderungen erfüllen, beispielsweise die Norm EN ISO 13849 für Maschinensicherheit und die Gerätenorm IEC61496 oder EN61496 für berührungslos wirkende Schutzeinrichtungen (BWS). Zur Erfüllung dieser Sicherheitsnormen sind eine Reihe von Maßnahmen zu treffen, wie Funktionstests, sichere Auswertung beispielsweise durch redundante Auswertungskanäle oder eine Überwachung der Verschmutzung optischer Bauteile.

Eine mögliche Fehlerquelle ist die Übertragung von Daten in den verschiedenen Verarbeitungsstufen. Ähnlich einer mehrkanaligen Auswertung ist auch eine mehrkanalige, redundante Datenübertragung als Absicherungsmaßnahme vorstellbar, aber dies erfordert einen hohen Hardwareaufwand und sehr große Bandbreiten.

Die Safety-Norm IEC 61508 "Functional Safety of Electrical/Electronic/Programmable Electronic Safety-related Systems (E/E/PE, or E/E/PES) beziehungsweise die Norm über sicherheitsgerichtete Feldbusprotokolle IEC 61158, "Industrial communication networks - Fieldbus specifications - Part 1: Overview and guidance for the IEC 61158 and IEC 61784 series" führen den Begriff eines sogenannten "Black Channel" ein. Das ist ein Kommunikationskanal für die Kommunikation von Gerät zu Gerät. Die Kommunikation über einen Black Channel wird aber gerade als nicht fehlersicher angesehen, es müssen also andere Maßnahmen ergriffen werden, um die Integrität der übertragenen Daten abzusichern und Fehler aufzudecken.

Außerhalb der Sicherheitstechnik gibt es diverse Ansätze, um die Integrität übertragener Daten zu schützen und zu prüfen. Das zielt oft auf Aspekte wie Vertraulichkeit und Authentifizierung ab, die in der Sicherheitstechnik allenfalls eine untergeordnete Rolle spielen. In anderen Fällen wird anhand von Checksummen und dergleichen festgestellt, wenn Daten nicht korrekt angekommen sind, um sie dann nochmals anzufordern, was in einer regelmäßig sehr zeitkritischen Sicherheitsanwendung kaum in Betracht kommt.

Die US 5 912 972 offenbart ein Verfahren zum Einbetten einer Authentifizierungsinformation in Bild- oder Tondaten. Dabei wird aber der ursprüngliche Datenstrom gezielt verändert, um die zusätzlichen Informationen unterzubringen. Die Veränderungen und die dadurch eingeführten Fehler sollen geringfügig bleiben und deshalb bei einer oberflächlichen Prüfung unbemerkt bleiben. Eine solch vage Einschränkung ist ersichtlich für einen menschlichen Beobachter gedacht. Jede Veränderung der Originaldaten in der Sicherheitstechnik würde einer ganz exakten Begründung bedürfen, warum dabei keine kritische Situation übersehen werden kann.

In der US 8 438 450 B2 werden sogenannte Nullpakete genutzt, um Checksummen in einen Datenstrom einzuschleusen. Nullpakete sind Auffülldaten ohne eigentliche Information, die ohnehin für eine konstante Datenrate erzeugt würden. Wenn es in einem Zeitfenster, der die Pufferkapazitäten für die Checksummenberechnung übersteigt, kein Nullpaket gibt, wird die Checksumme nur für einen Teil der Daten berechnet. Es ist offensichtlich für eine Sicherheitsanwendung inakzeptabel, die Maßnahmen zur Überprüfung der Datenintegrität teilweise vom Zufall abhängig zu machen.

Die US 8 478 056 B2 versucht einen Fehler in einem Bilddatenstrom zu lokalisieren, um den Fehler gegebenenfalls durch eine nicht näher beschriebene Rekonstruktion zu verdecken. Ein weiteres Mal richtet sich das an einen menschlichen Anwender. In einer sicherheitstechnischen Anwendung könnte die Rekonstruktion eine kritische Erfassungssituation überdecken.

Die US 2014/0314235 A1 offenbart eine Vorrichtung zum Erzeugen von vertrauenswürdigen Bilddaten. Dazu wird zusätzlich zu den Bilddaten auch eine Tiefeninformation erfasst, und zumindest die Tiefeninformation wird verschlüsselt. Damit können authentische Bilder einer dreidimensionalen Szene von abfotografierten Bildern der Szene unterschieden werden.

Es ist daher Aufgabe der Erfindung, eine sichere Möglichkeit zum Erkennen von Fehlern bei der Übertragung von Bilddaten anzugeben.

Diese Aufgabe wird durch ein Verfahren zum Übertragen von Bilddaten und einen sicheren optoelektronischen Sensor nach Anspruch 1 beziehungsweise 15 gelöst. Der Begriff Bilddaten umfasst auch Vorstufen und Verarbeitungsergebnisse, beispielsweise Rohbilder eines Bildsensors, daraus erzeugte 3D-Bilddaten oder Tiefenkarten sowie Detektionskarten mit erkannten Objekten, Filtermasken und dergleichen. Die Bilddaten entstehen vorzugsweise aus Erfassungsdaten eines sicheren optoelektronischen Sensors, insbesondere einer Sicherheitskamera. Auch die Messpunkte eines Laserscanners können als Bilddaten aufgefasst werden. Die Übertragung der Bilddaten erfolgt sicher innerhalb des optoelektronischen Sensors und/oder eines Sicherheitssystems, etwa vom Sensor in eine angeschlossene sichere Steuerung zur weiteren Auswertung. Dabei ist sicher jeweils im Sinne der einleitend genannten oder vergleichbarer Sicherheitsnormen zu verstehen. Zu Überprüfung der Datenintegrität, d. h. um zu erkennen, wenn Daten fehlen, vertauscht wurden oder sonst irgendwie verändert sind, werden vor der Übertragung Metainformationen hinzugefügt. Nach der Übertragung werden die Metainformationen anhand von Erwartungswerten überprüft.

Die Erfindung geht von dem Grundgedanken aus, eine normgerechte, sichere Datenübertragung über eine an sich nicht sichere Kommunikationsverbindung zu erreichen. Dazu wird insbesondere ein Black Channel als Übertragungsweg genutzt, der einleitend eingeführt wurde. Es handelt sich also um eine Standardkommunikation, die selbst keine fehlersichere Übertragung im Sinne der einleitend genannten Normen garantiert. Die Erfindung kommt mit Black Channels aus, weil Datenverluste beziehungsweise Datenveränderungen anhand der übertragenen Metainformationen aufgedeckt werden. Die Kommunikation über Black Channels wird herkömmlich nur von Gerät zu Gerät über Standardschnittstellen genutzt. Hier werden jedoch die Vorteile der kosteneffizienten Verwendung von Standardtechnologien und einfacheren Hardwareauslegung im Geräteinneren genutzt.

Die Metainformationen zur Funktionsüberwachung werden den Bilddaten vorangestellt und/oder angehängt. Die Bilddaten selbst bleiben dabei vorzugsweise unverändert. Es ist auch möglich, Metainformationen bestimmten Teilpaketen der Bilddaten voranzustellen oder sie daran anzuhängen. Solche Teilpakete sind insbesondere Bildzeilen. Überall, wo in dieser Beschreibung Bildzeilen oder eine zeilenweise Verarbeitung angesprochen ist, sind alternativ auch Bildspalten und eine spaltenweise Verarbeitung bei entsprechend angepasster Architektur von Bildsensor und Verarbeitung gemeint.

Um die Datenintegrität prüfen zu können, enthalten die Metainformationen eine Information über die Struktur der Bilddaten. Damit werden zunächst unabhängig vom Bildinhalt schnell und verlässlich Übertragungsfehler aufgedeckt. Eine inhaltliche Überprüfung kommt vorzugsweise hinzu.

Die Erfindung hat den Vorteil, dass eine abgesicherte Übertragung von Bilddaten einschließlich Rohbilder, dreidimensionaler Bilder und Tiefenkarten, Detektionskarten und Filtermasken über beliebige unsichere Übertragungswege erreicht wird. Dadurch können Standardschnittstellen beziehungsweise beliebige, auch unstrukturierte Speichermedien verwendet werden, und es sind gemischte Anwendungen in Hardware und Software möglich. Weder die Bilddaten noch der Übertragungskanal müssen für die sichere Übertragung und Rückgewinnung der Struktur in besonderer Weise ausgelegt werden, wie dies vielfach im Stand der Technik durch zusätzliche, reservierte Codewörter oder Steuerleitungen geschieht.

Vorzugsweise wird eine sicherheitsgerichtete Reaktion ausgelöst, insbesondere eine auf Basis der Bilddaten überwachte Maschine angehalten, wenn die Überprüfung der Metainformationen keine ausreichende Datenintegrität der Bilddaten ergibt. Die sichere Datenübertragung ist eine der Voraussetzungen für einen verlässlichen Personenschutz durch einen Sicherheitssensor. Ist diese Voraussetzung nicht gegeben und ein Fehler aufgedeckt, so wird eine sicherheitsgerichtete Reaktion des Systems ausgelöst. Allerdings ist nicht jeglicher Datenfehler automatisch sicherheitskritisch. Beispielsweise ist ein Bildausfall deutlich schwerwiegender als eine Fehlübertragung einer einzelnen Bildzeile, insbesondere wenn diese einen nicht sicherheitskritischen Teilbereich betrifft. Auch sind transiente Fehler etwa in einem einzigen Frame bei Aufnahme mehrerer Frames innerhalb der Ansprechzeit unter Umständen tolerierbar.

Die Bilddaten weisen bevorzugt mindestens zwei Kameraaufnahmen eines Überwachungsbereichs aus versetzter Perspektive auf, die an eine Stereoskopieeinheit zum Erzeugen einer Tiefenkarte nach dem Stereoskopieprinzip übertragen werden. Dies ist ein Beispiel eines Übertragungswegs in einem sicheren Sensor, nämlich der Rohbilddaten einer Stereokamera an eine Stereoskopie, die in einem Stereoskopiealgorithmus korrespondierende Bildmerkmale sucht und damit Disparitäten schätzt und anhand von Kameraparametern wie dem Basisabstand der Stereokamera in Entfernungen umrechnet. Die dabei entstehende Tiefenkarte entspricht wiederum Bilddaten, die erfindungsgemäß an weitere Verarbeitungsstufen übertragen werden können.

Die Bilddaten werden vorzugsweise innerhalb eines optoelektronischen Sensors von einem Bildsensor zu einem FPGA (Field Programmable Gate Array) und/oder von einem FPGA zu einem Mikroprozessor übertragen. Strenggenommen kann der Bildsensor selbst nicht encodieren und so kommunizieren, daher wird auch eine Baugruppe aus dem Bildsensor selbst mit entsprechendem Kommunikationsbaustein, etwa einem weiteren FPGA, als Bildsensor aufgefasst. Das ist ein Beispiel einer gemischten Anwendung der erfindungsgemäßen Übertragung zwischen Hardware (FPGA) und Software (Mikroprozessor). FPGA und Mikroprozessor sind nur Beispiele für Auswertungsbausteine, die aber in der Bildverarbeitung große Vorteile haben. Ein FPGA kann in kurzer Zeit eine große Zahl einfacher Verarbeitungsschritte vornehmen, ein Mikroprozessor ist dafür flexibler und hat Vorteile für komplexere Auswertungen, ist dafür aber nicht ganz so geeignet für eine sehr schnelle Verarbeitung großer Datenmengen. Im Beispiel einer sicheren Stereokamera könnte die Stereoskopieeinheit oder zumindest die Korrelation für die Suche nach Merkmalskorrespondenzen auf einem FPGA implementiert sein.

Die Bilddaten werden vorzugsweise zwischen einem FPGA und/oder Mikroprozessor und einem Speicher übertragen. Diese Übertragung ist jeweils nur in einer Richtung denkbar, also nur lesend oder nur schreibend, indem etwa das FPGA eine Tiefenkarte für den Mikroprozessor oder der Mikroprozessor eine Detektionskarte mit erfassten Objekten oder eine Filtermaske mit Gefahrenstellen für das FPGA speichert, aber auch in beiden Richtungen für einen späteren erneuten Zugriff desselben Bausteins auf die abgelegten Daten.

Die Metainformationen werden bevorzugt von einem Encoder vor der Übertragung als Kopfabschnitt vorangestellt und/oder als Fußabschnitt angehängt, wobei ein Decoder Kopfabschnitte und/oder Fußabschnitte prüft. Der Encoder ergänzt für die Übertragung die Kopf- beziehungsweise Fußabschnitte mit den Metainformationen. Der Decoder führt nach der Übertragung seine Überprüfungen durch, indem beispielsweise die in den Metainformationen gespeicherte Struktur in den übertragenen Daten nachvollzogen wird. Die ursprünglichen Bilddaten wurden vorzugsweise unverändert übertragen, die Kopf- und Fußabschnitte können im Decoder nach den Überprüfungen wieder entfernt werden.

Vorzugsweise werden Metainformationen je Bild und/oder je Bildzeile hinzugefügt. Je nach Ausführungsform gibt es damit Metainformationen, insbesondere Kopf- beziehungsweise Fußabschnitte, für ganze Bilder und/oder Bildzeilen. Metainformationen für Teilpakete, hier Bildzeilen, haben den Vorteil, dass Fehler bei einer zeilenweisen onthe-fly-Auswertung rascher lokalisiert werden. Außerdem ist für die Sicherheitsbewertung nützlich zu wissen, wenn ein Fehler nur bestimmte Zeilen betrifft und nicht etwa das ganze Bild ausgefallen ist oder dies mangels genauerer Information angenommen werden muss.

Innerhalb der nicht sicheren Kommunikationsverbindung erfolgt vorzugsweise für die eigentliche Übertragung eine zusätzliche Codierung und Decodierung der zu übertragenden Bilddaten samt Metainformationen. Das betrifft eine innere Übertragungsebene, die in dem Black Channel gekapselt ist. Die eigentliche Übertragung darf ja praktisch jedem nicht sicheren Protokoll folgen. Dafür können also auch an sich bekannte Vorteile wie Datenkompression oder Datenrekonstruktion verwendet werden. Das betrifft jeweils andere Aspekte als die Sicherheit, wie kürzere Übertragungszeiten, weniger Bandbreite oder eine höhere Erfolgsquote der Übertragung. Letzteres betrifft im Übrigen nur die Verfügbarkeit, keineswegs die Sicherheit, denn die erfindungsgemäße äußere Übertragungsebene mit Überprüfung anhand der Metainformationen bleibt unberührt und deckt Fehler unabhängig vom inneren Übertragungsweg sicher auf. Durch Datenrekonstruktion können solche Fehler allerdings vermieden werden, so dass es seltener zu sicherheitsgerichteten Reaktionen kommt.

Die Metainformationen weisen vorzugsweise magische Zahlen auf (magic number). Als magische Zahl bezeichnet man einen vorzugsweise auffälligen, jedenfalls wiedererkennbaren Wert, der in den Nutz- oder Bilddaten zumindest in Kombination von Wert und Position nur mit geringer Wahrscheinlichkeit zufällig auftritt. Prinzipiell könnten die Bilddaten zufällig jeden Wert und damit auch die magische Zahl enthalten, aber das ist ausgerechnet an der erwarteten Position äußerst unwahrscheinlich und gerade bei wiederholter Verwendung derselben magischen Zahl praktisch ausgeschlossen. Außerdem kann vorzugsweise eine magische Zahl gewählt werden, die besonders selten in den Nutzdaten vorkommt, etwa weil sie aus natürlichen Bildmerkmalen mit besonders geringer Wahrscheinlichkeit entsteht, beispielsweise entsprechend einem mehrfachen scharfen Kontrastwechsel auf engstem Raum, oder die nach Möglichkeit gar nicht in echten Bilddaten auftritt.

Nach der Übertragung werden vorzugsweise das Vorhandensein und die Position der magischen Zahlen in der erwarteten Struktur überprüft. Über die magische Zahl können die Metainformationen sehr einfach in den übertragenen Daten gefunden werden. Dabei muss aber nicht nur die magische Zahl gelesen werden können, sondern auch die erwartete Struktur eingehalten werden, ansonsten liegt ein Übertragungsfehler vor. Beispielsweise muss eine magische Zahl als Teil eines Kopfabschnitts am Anfang und als Teil eines Fußabschnitts am Ende der übertragenen Daten angeordnet sein. Besonders nützlich sind magische Zahlen als Teil von Metainformationen für Bildzeilen, da sie dann gleich vielfach in der richtigen Anzahl und im richtigen gegenseitigen Abstand vorhanden sein müssen. So lässt sich die Struktur der übertragenen Daten sehr rasch und verlässlich verifizieren.

Vorzugsweise werden Metainformationen den Bildzeilen vorangestellt, und die Bildzeilen weisen für die Übertragung unterschiedliche Längen auf, werden jedoch nach der Übertragung auf ein festes Raster gleich langer Zeilen aufgefüllt. Das ist eine Alternative zur Übertragung stets gleich langer Bildzeilen. Unterschiedlich lange Bildzeilen entstehen insbesondere durch Komprimierung. Die Metainformationen enthalten vorzugsweise jeweils eine Information über die tatsächliche Länge der zugehörigen Bildzeile. Nach der Übertragung werden die Bildzeilen auf gleiche Länge aufgefüllt und so in einem regelmäßigen Raster gespeichert. Dadurch kann die Struktur so geprüft werden, als wären gleich lange Bildzeilen übertragen worden. Insbesondere liegen dann magische Zahlen der Metainformationen in regelmäßigem Abstand zueinander. Aufgefüllt wird mit beliebigen Werten wie etwa Nullen, oder es werden einfach die zufällig an den betreffenden Stellen im Speicher stehenden Werte beibehalten. Die Auffüllbereiche werden inhaltlich ohnehin nicht genutzt, denn aus den Metainformationen bleibt ersichtlich, wo die eigentliche Bildzeile endet und ein Auffüllbereich beginnt.

Die Metainformationen weisen vorzugsweise einen Prüfwert je Bild und/oder Bildzeile auf. Während bisher hauptsächlich Prüfung der Integrität der Datenstruktur erläutert wurde, dient diese Überprüfung der inhaltlichen Kontrolle der übertragenen Daten. Der Prüfwert ist beispielsweise eine Checksumme (wie CRC, Cyclic Redundancy Check) oder ein Hashwert. Nach der Übertragung wird der Prüfwert erneut berechnet und mit dem übertragenen Prüfwert verglichen.

Die Metainformationen weisen bevorzugt eine Bildbreite und/oder Bildhöhe auf. Das entspricht der Anzahl der Bildzeilen und Bildspalten beziehungsweise der jeweiligen Pixel oder Werte je Bildzeile. Damit wird als eine weitere Strukturbeschreibung die Geometrie der Bilder übertragen.

Die Metainformationen weisen vorzugsweise einen Bildzeilenzählwert und/oder einen Bildzählwert auf. Diese Zählwerte werden in festgelegter Weise für jedes Bild beziehungsweise jede Bildzeile individuell festgelegt, vorzugsweise stetig heraufgezählt. Dadurch werden Fehler wie Doppelübertragungen, Vertauschungen und fehlende Bilder oder Bildzeilen erkannt. Es gibt Bilddaten, die sich während des Betriebs oder zumindest über eine ganze Phase des Betriebs nicht verändern, etwa Filtermasken für Arbeitsbereiche oder Gefahrenstellen. Solche mehrfach gleichbleibend übertragenen Bilddaten enthalten vorzugweise anstelle eines Bildzählwerts, dessen Wert unverändert bliebe, eine Identifikation, aus der hervorgeht, um welche Art von Bilddaten es sich handelt oder eine Information, um die gewählten Bilddaten zu authentifizieren.

Ein erfindungsgemäßer sicherer optoelektronischer Sensor weist vorzugsweise mindestens einen Bildsensor und eine Steuer- und Auswertungseinheit auf. Als Bildsensor wird im engeren Sinne eine zeilen- oder matrixförmige Pixelanordnung bezeichnet, aber auch im weiteren Sinne ein einfacher Lichtempfänger, der eine Abtastbewegung wie in einem Laserscanner vollzieht. In dem Sensor werden Bilddaten von dem Bildsensor zu der Steuer- und Auswertungseinheit oder zwischen Bausteinen der Steuer- und Auswertungseinheit mit einem erfindungsgemäßen Verfahren sicher übertragen. Auch wenn der Sensor vorzugsweise ein abgeschlossenes System innerhalb eines Gehäuses ist, kann die Steuer- und Auswertungseinheit auch zumindest teilweise außerhalb des Sensors angeordnet sein, etwa in einem dem Sensor zugehörigen Computer oder in einer an den Sensor angeschlossenen sicheren Steuerung.

Der Sensor ist bevorzugt eine Sicherheitskamera, insbesondere eine 3D-Kamera, die wiederum jede bekannte Technik verwenden kann, wie ein Lichtlaufzeitprinzip mit direkter Laufzeitmessung von Lichtsignalen oder Phasenmessung oder eine Entfernungsschätzung aus Helligkeiten oder Fokuslagen (DFF, Depth from Focus, DFD, Depth from Defocus). Besonders bevorzugt nutzt die 3D-Kamera ein Triangulationsprinzip, bei dem zwei Kamerabilder einer bewegten Kamera oder einer Stereokamera untereinander korreliert werden, oder alternativ ein Beleuchtungsmuster mit einem Kamerabild korreliert wird, um so Disparitäten zu schätzen und daraus Abstände zu bestimmen. Auch ein Laserscanner erzeugt praktisch dreidimensionale Bilddaten durch seine periodische Abtastung. Bei einem klassischen Laserscanner sind diese Bilddaten auf eine Abtastebene beschränkt, aber durch in Elevation bewegte Abtastung oder mehrere in Elevation versetzte Abtaststrahlen entfällt diese Beschränkung auch für Laserscanner.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische dreidimensionale Darstellung einer 3D-Kamera und ihres Überwachungsbereichs
- Fig. 2: eine schematische Darstellung von beispielhaften Übertragungspfaden für Bilddaten;
- Fig. 3a: eine schematische Darstellung der Bildzeilen zu übertragender Bilddaten sowie der Zeitpunkte zu Beginn beziehungsweise Ende eines Frames und einer jeweiligen Bildzeile zur Illustration eines Encoders;
- Fig. 3b: eine schematische Darstellung der Bildzeilen gemäß Figur 3a nach der Codierung für die Übertragung;
- Fig. 4: eine schematische Darstellung der Struktur zu übertragender Bildzeilen unterschiedlicher Länge samt Kopf- und Fußabschnitten; und
- Fig. 5: eine schematische Darstellung der Übertragung in einem Black Channel mit zusätzlicher innerer Codierung der übertragenen Daten.

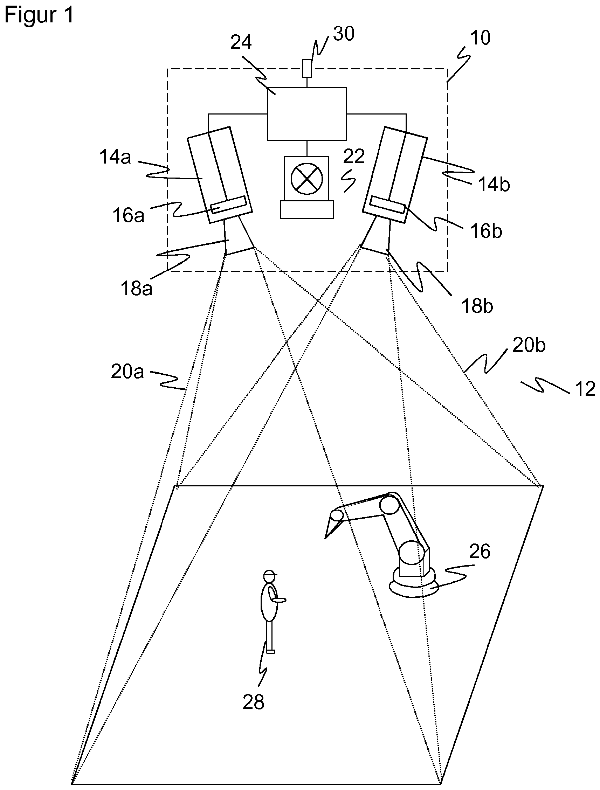

Figur 1 zeigt in einer schematischen dreidimensionalen Darstellung den allgemeinen Aufbau einer Stereokamera 10 zur Aufnahme einer Tiefenkarte. Die Stereokamera 10 dient nur als ein Beispiel für einen erfindungsgemäßen sicheren optoelektronischen Sensor, in dem Bilddaten in verschiedenen Formen und Verarbeitungsstufen sicher übertragen werden müssen. Ebenso denkbar wären andere optoelektronische Sensoren, unter anderem diverse Kameras einschließlich der der einleitend genannten anderen 3D-Kameras mit Bestimmung der Lichtlaufzeit oder einer Auswertung der Störung passiver zweidimensionaler Muster oder mit Korrelation von Bild und projizierten Beleuchtungsmustern sowie Laserscanner.

Zur Erfassung eines Raumbereichs 12 sind zwei Kameramodule 14a, 14b in einem bekannten festen Abstand zueinander montiert und nehmen jeweils Bilder des Raumbereichs 12 auf. In jeder Kamera ist ein Bildsensor 16a, 16b vorgesehen, üblicherweise ein matrixförmiger Aufnahmechip, der ein rechteckiges Pixelbild aufnimmt, beispielsweise ein CCD- oder ein CMOS-Sensor. Den Bildsensoren 16a, 16b ist je ein Objektiv 18a, 18b mit einer abbildenden Optik zugeordnet, welche in der Praxis als jedes bekannte Abbildungsobjektiv realisiert sein können. Der maximale Sichtwinkel dieser Optiken ist in Figur 1 durch gestrichelte Linien dargestellt, die jeweils eine Sichtpyramide 20a, 20b bilden.

Zwischen den beiden Bildsensoren 16a, 16b ist eine Beleuchtungseinheit 22 vorgesehen, um den Raumbereich 12 mit einem strukturierten Muster auszuleuchten. Die dargestellte Stereokamera ist demnach für aktive Stereoskopie ausgebildet, bei der das Muster auch einer an sich strukturlosen Szenerie überall auswertbare Kontraste aufprägt. Alternativ ist keine oder eine homogene Beleuchtung vorgesehen, um die natürlichen Objektstrukturen im Raumbereich 12 auszuwerten, was aber regelmäßig zu zusätzlichen Bildfehlern führt.

Mit den beiden Bildsensoren 16a, 16b und der Beleuchtungseinheit 22 ist eine Steuer- und Auswertungseinheit 24 verbunden. Die Steuer- und Auswertungseinheit 24 kann in verschiedenster Hardware implementiert sein, beispielsweise digitalen Bausteinen wie Mikroprozessoren, ASICs (Application Specific Integrated Circuit), FPGAs (Field Programmable Gate Array), GPUs (Graphics Processing Unit) oder Mischformen davon, die beliebig auf interne und externe Komponenten verteilbar sind, wobei externe Komponenten auch über Netzwerk oder eine Cloud eingebunden sein können, soweit Latenzen beherrscht oder toleriert werden können. Da das Erzeugen der Tiefenkarte und deren Auswertung sehr rechenintensiv sind, wird vorzugsweise eine zumindest teilweise parallele Architektur gebildet.

Die Steuer- und Auswertungseinheit 24 erzeugt mit Hilfe der Beleuchtungseinheit 22 das strukturierte Beleuchtungsmuster und empfängt Bilddaten der Bildsensoren 16a, 16b. Aus diesen Bilddaten berechnet sie mit Hilfe einer stereoskopischen Disparitätsschätzung die 3D-Bilddaten beziehungsweise die Tiefenkarte des Raumbereichs 12. Der gesamte erfassbare Raumbereich 12 oder auch Arbeitsbereich kann über eine Konfiguration eingeschränkt werden, beispielsweise um störende oder nicht notwendige Bereiche auszublenden.

Eine wichtige sicherheitstechnische Anwendung der Stereokamera 10 ist die Überwachung einer Maschine 26, die in der Figur 1 durch einen Roboter symbolisiert ist. Die Maschine 26 kann auch wesentlich komplexer sein als gezeigt, aus vielen Teilen bestehen oder sogar eigentlich eine Anordnung mehrerer Maschinen sein, etwa mehrerer Roboter oder Roboterarme. Vorzugsweise wird die gefahrbringende Maschine 26 für die Auswertung als mindestens eine fixe oder wechselnde Gefahrenstelle modelliert. Eine Gefahrenstelle ist ein Raumbereich, in dem die Maschine 26 in einem jeweiligen Zeitabschnitt Arbeitsbewegungen ausführt, oder etwas allgemeiner ein Raumbereich, der zum Schutz vor Verletzungen durch die Arbeitsbewegungen von Personen nicht berührt werden darf. Eine Gefahrenstelle kann die Maschine 26 oder Teilbereiche der Maschine 26 mit etwas Abstand umgeben, um den Arbeitsbewegungen ausreichend Spiel zu lassen und um Gefahrenstellen durch einfache geometrische Körper wie Quader oder Kugeln darstellen zu können.

Eine bevorzugte Auswertung ist eine Abstandsüberwachung beispielsweise für eine Mensch-Roboter-Kollaboration unter Berücksichtigung von DIN EN ISO 10218 beziehungsweise ISO/TS 15066. Dabei werden mit Hilfe der Bilddaten der Stereokamera 10 die Objekte 28 erfasst. Eine vorteilhafte Darstellungsform der Objektdetektionen ist eine 2D-Detektionskarte, deren Pixel an Positionen, in denen ein Objekt 28 einer Mindestgröße erfasst wurde, der dazu gemessene Entfernungswert eingetragen ist, und die sonst leer bleibt. Mit Hilfe dieser Objektdetektionen, die natürlich auch anders repräsentiert sein können, wird der kürzeste Abstand eines Objekts 28 zu der Maschine 26 beziehungsweise einer für die Maschine 26 erzeugten Gefahrenstelle berechnet.

Der kürzeste Abstand wird über eine sichere Schnittstelle 30 an eine Steuerung ausgegeben, entweder direkt an die Steuerung der Maschine 26 oder an eine Zwischenstation wie eine sichere Steuerung. In der Steuerung wird der kürzeste Abstand ausgewertet. Im Gefährdungsfall wird eine sicherheitsgerichtete Reaktion eingeleitet, um beispielsweise die Maschine 26 anzuhalten, abzubremsen oder ausweichen zu lassen. Ob dies erforderlich ist, kann neben dem kürzesten Abstand von weiteren Bedingungen wie den Geschwindigkeiten oder der Beschaffenheit von Objekt 28 und dem Maschinenbereich 26 der drohenden Kollision abhängen. Die Sicherheitsbewertung kann alternativ in der Steuer- und Auswertungseinheit 24 selbst erfolgen.

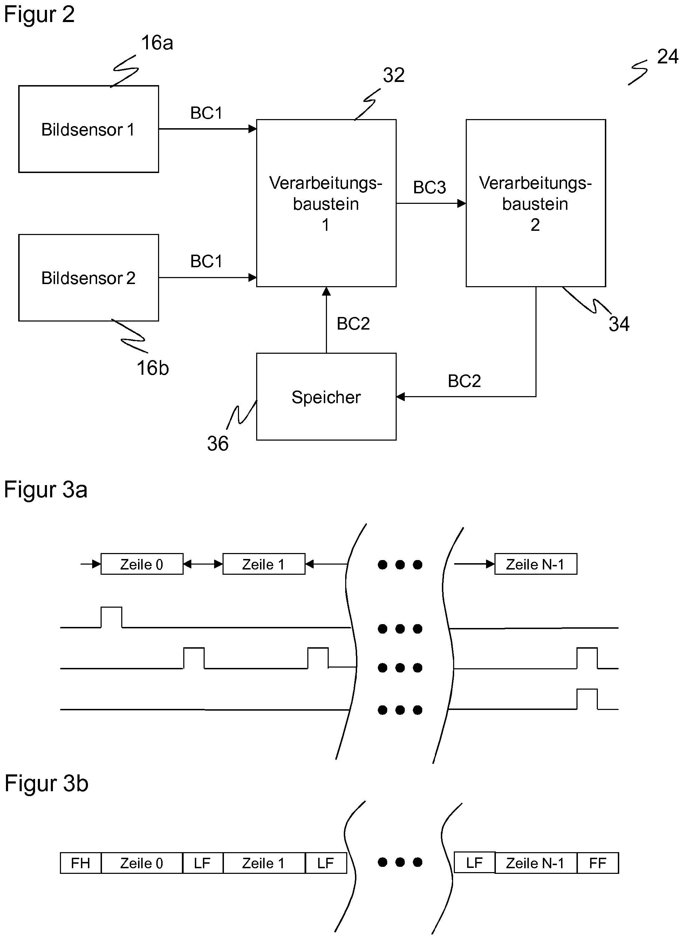

Eine Sicherheitsanwendung wie beschrieben, basierend auf einem kürzesten Abstand, ist auch nur ein Beispiel, es sind andere Sicherheitskonzepte denkbar. Die Erfindung befasst sich mit der Datenübertragung, nicht der konkreten Form des sicheren optoelektronischen Sensors zur Erzeugung von Bilddaten, der Überwachung oder der Auswertung. Die erfindungsgemäße sichere Übertragung für rohe und verarbeitete Bilddaten als eine Maßnahme, um einen sicheren optoelektronischen Sensor wie die Stereokamera 10 insgesamt fehlersicher im Sinne von einschlägigen Sicherheitsnormen auszulegen, wird nun unter Bezugnahme auf die Figuren 2 bis 5 genauer erläutert.

Figur 2 zeigt schematisch den Datenfluss in Übertragungskanälen zwischen verschiedenen Erfassung- und Verarbeitungsbausteinen. Das dargestellte Beispiel orientiert sich weiterhin an der Stereokamera 10, ohne dadurch die erfindungsgemäße Datenübertragung auf Stereokameras einzuschränken. Der Aufbau und Datenfluss könnte schon innerhalb einer Stereokamera abweichen.

Die Bildsensoren 16a-b der Kameramodule 14a-b der Stereokamera 10 erzeugen zunächst zwei Rohbilder beispielsweise mit einer Frequenz von 50 Hz und mit jeweils 1280 x 1024 Bildpunkten. Diese Bilddaten werden von den Bildsensoren 16a-b beziehungsweise einem den Bildsensoren 16a-b zugeordneten Kommunikationsbaustein, der hier vereinfachend als Teil der Bildsensoren 16a-b aufgefasst wird, zu einem ersten Verarbeitungsbaustein 32 der Steuer- und Auswertungseinheit 24 übertragen. Dabei können rein beispielhaft die Bildsensoren 16a-b auf einer ersten Leiterplatte und die Komponenten der Steuer- und Auswertungseinheit 24 auf einer Hauptleiterplatte untergebracht sein, wobei auch eine andere Anzahl von Leiterplatten und Verteilung der Komponenten denkbar ist. Der erste Verarbeitungsbaustein 32 ist beispielsweise ein FPGA.

Von der internen Bildverarbeitung des ersten Verarbeitungsbausteins 32 aus den Rohbildern erzeugte weitere Bilddaten werden zu einem zweiten Verarbeitungsbaustein 34 übertragen, insbesondere einem Mikroprozessor, und dort mittels Bildverarbeitungssoftware weiterverarbeitet. Dazu kann eine unsichere PCIExpress-Schnittstelle verwendet werden.

In einem Speicher 36 sind für die Bildverarbeitung im ersten Verarbeitungsbaustein 32 benötigte Karten abgelegt, wie Filtermasken, Karten mit Gefahrenstellen und dergleichen. Solche Karten werden von dem ersten Verarbeitungsbaustein 32 aus dem Speicher 36 synchron zu den zu verarbeitenden Bilddaten ausgelesen. Die Karten werden vorab oder zur Laufzeit von dem zweiten Verarbeitungsbaustein 34 in dem Speicher 36 abgelegt oder modifiziert. Abweichend von der Darstellung wäre auch denkbar, dass der erste Verarbeitungsbaustein 32 schreibend beziehungsweise der zweite Verarbeitungsbaustein 34 lesend auf den Speicher 36 zugreift. In einem konkreten, nicht einschränkend zu verstehenden Beispiel ist die Kommunikation zwischen dem zweiten Verarbeitungsbaustein 34 und dem Speicher 36 über PCIExpress implementiert, und der erste Verarbeitungsbaustein 32 nutzt zur Kommunikation mit dem Speicher 36 die direkte Schnittstelle DDR4.

Welche Verarbeitungsschritte der erste Verarbeitungsbaustein 32 und der zweite Verarbeitungsbaustein 34 eventuell auch gemeinsam übernehmen und welche Karten in dem Speicher 36 abgelegt und daraus ausgelesen werden, variiert mit der konkreten Anwendung und Implementierung. Einige beispielhafte Verarbeitungsschritte für eine sichere Stereokamera 10 sind Vorverarbeitungen wie eine Glättung oder eine Geometriekorrektur, das Erzeugen einer Tiefenkarte mittels eines Stereoalgorithmus', die Erfassung von relevanten Objekten 28 unter Bedingungen wie eine Mindestgröße oder die Übereinstimmung mit einem Körpermodell und das Erstellen einer Detektionskarte, das Ausmaskieren von Hintergründen und bekannten zulässigen Objekten oder von Gefahrenstellen, die selbst nicht überwacht werden, das Berechnen von Abständen zwischen Gefahrenstelle und Objekt 28 und eine Sicherheitsbewertung auf Grundlage eines kürzesten Abstands. Dementsprechend müssen immer wieder Bilddaten einschließlich Tiefen-, Detektions- und sonstigen Karten zwischen den verschiedenen Komponenten übertragen werden.

Für eine Sicherheitsanwendung werden diese diversen beispielhaften Übertragungswege für sicherheitsrelevante Bilddaten in unterschiedlichen Verarbeitungsstadien und die vereinfachend auch als Bilddaten bezeichnete Karten in den Speicher 36 und aus dem Speicher 36 abgesichert. Die Übertragung selbst erfolgt erfindungsgemäß kosten- und hardwareeffizient auf einem unsicheren Kanal und vorzugsweise über jeweilige Standardprotokolle. Dazu werden vorzugsweise Black Channels wie einleitend eingeführt genutzt, und dementsprechend sind die Kommunikationswege in Figur 2 durch mit BC bezeichnete Pfeile dargestellt. Die nachgestellte Ziffer soll jeweils angepasste Implementierungen für die unterschiedlichen beteiligten Bausteine bezeichnen, dies wird weiter unten noch etwas genauer differenziert.

Die Sicherung der Daten erfolgt nicht durch Absicherung des Übertragungswegs selbst, denn dabei handelt es sich um unsichere Kommunikationskanäle oder Black Channels, sondern durch empfängerseitige Überprüfung anhand von Metainformationen. Dazu werden die Bilddaten vor der Übertragung in einem Encoder um Metainformationen ergänzt, der den Bilddaten bildweise und/oder bildzeilenweise Kopf- und/oder Fußabschnitte (Header und Footer) voranstellt oder anhängt. Auf der Empfängerseite des Übertragungskanals werden die Metainformationen in einem Decoder geprüft und vorzugsweise wieder entfernt.

Die Funktionsweise des Encoders wird in Figur 3a beispielhaft illustriert, während Figur 3b ein Beispiel für die resultierenden, um die Metainformationen ergänzten Bilddaten zeigt. Oben in Figur 3a sind die eigentlichen Bilddaten Zeile 0 ... Zeile N-1 gezeigt, wobei die Bilddaten auseinandergeschoben werden, um im Datenstrom Platz für die Metainformationen zu schaffen. Darunter dargestellt sind drei Pulszüge, deren steigende Flanke in dieser Reihenfolge von oben nach unten den Beginn eines Bildes (Frame), das Ende einer jeweiligen Bildzeile (Line) und das Ende des Bildes markieren.

Mit Hilfe dieser Zeitpunkte werden, wie in Figur 3b gezeigt, ein Kopfabschnitt zu Beginn des Bildes (FH, Frame Header), je ein Fußabschnitt nach jeder Bildzeile (LF, Line Footer) und ein Fußabschnitt am Ende des Bildes (FF, Frame Footer) eingefügt, der hier zugleich die Funktion des Fußabschnitts für die letzte Zeile N-1 übernimmt, der alternativ zusätzlich eingefügt werden kann. Die eigentlichen Bilddaten Zeile 0 ... Zeile N-1 sind in dem encodierten Datenstrom unverändert enthalten.

Die gezeigten Abschnitte müssen nicht alle eingefügt werden. Es ist denkbar, nur Metainformationen je Bild (Frame) oder nur je Bildzeile (Line) vorzusehen, und zwar jeweils als Kopf- und/oder Fußabschnitt. Auch andere Teilpakete als Bildzeilen sind vorstellbar, etwa Fragmente von Bildzeilen, mehrere Bildzeilen oder nicht zeilenförmige Bildausschnitte. Bildspalten werden nicht als andere Teilpakete aufgefasst, sondern fallen vorzugsweise mit unter den Begriff Bildzeile, da dies nur eine Konvention ist, die von der Orientierung beziehungsweise Architektur des Bildsensors und der Verarbeitung abhängt.

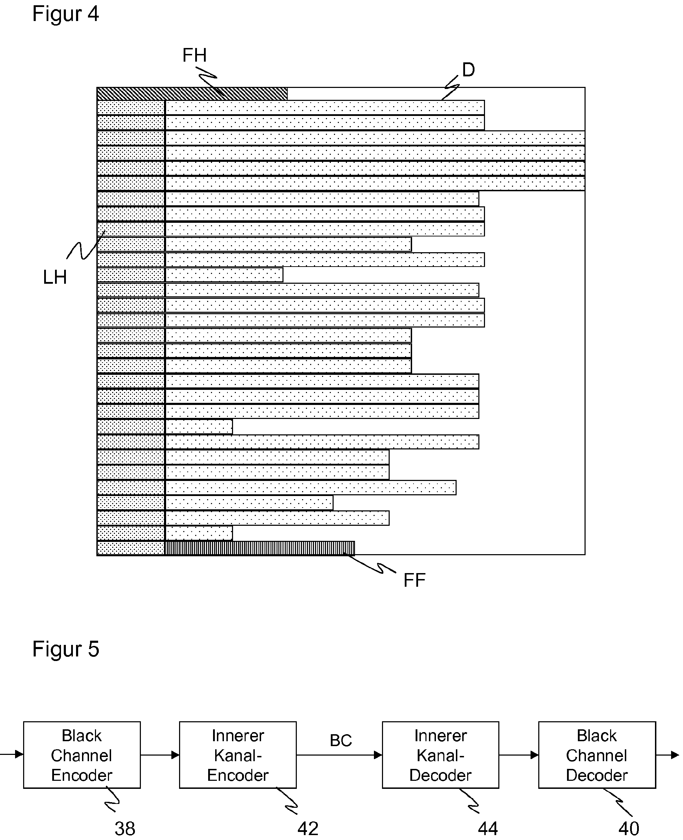

Figur 4 zeigt ein Beispiel anderer Bilddaten mit der Besonderheit, dass die Bildzeilen nicht gleich lang sind. Das kann das Ergebnis einer Kompression sein, die die verschiedenen Bildzeilen in unterschiedlichem Grad zu verkürzen vermag. In diesem Fall ist kann es vorteilhaft sein, für die Bildzeilen Kopfabschnitte (LH, Line Header) anstelle von oder zusätzlich zu Fußabschnitten zu verwenden, deren Metainformationen unter anderem die verkürzte Bildzeilenlänge enthalten.

Die je nach Ausführungsform an verschiedenen Positionen eingefügten Metainformationen enthalten Strukturmarkierungen zur Absicherung der Übertragung. Aus diesen Strukturmarkierungen geht hervor, welche Struktur bei korrekt übertragenen Bilddaten zu erwarten ist. Eine inhaltliche Absicherung kommt vorzugsweise hinzu.

Als Strukturmarkierung werden insbesondere magische Zahlen (magic numbers) verwendet. In einem Kopf- oder Fußabschnitt für das ganze Bild (FH oder FF) wird damit von dem Decoder auf der Empfängerseite des Übertragungskanals der Beginn beziehungsweise das Ende des Bildes erkannt. In einem Kopf- oder Fußabschnitt einer Bildzeile (LH oder LF) ergib sich ein ganzes Feld von magischen Zahlen in jeweils aus den Metainformationen bekanntem, insbesondere regelmäßigem gegenseitigen Abstand. Die Kombination aus erwartetem Wert der magischen Zahl und der jeweiligen exakten erwarteten Position im Datenstrom stellt die Integrität der Struktur sicher. Dadurch können auch die weiteren Metainformationen der Kopf- beziehungsweise Fußabschnitte sicher über die Position identifiziert und verwendet werden.

Die magischen Zahlen können noch weitere Funktionen haben. So lassen sich verschiedene magische Zahlen nutzen, um Datenströme zu authentifizieren, etwa wenn verschiedene Datenströme über dieselbe Schnittstelle übertragen werden. Außerdem können magische Zahlen so gewählt werden, dass sie zur Überprüfung der gewünschten Endianness benutzt werden können.

Die inhaltliche Integrität der übertragenen Bilddaten einschließlich der Metainformationen kann über Checksummen oder ähnliche Hash-Verfahren wie CRC verifiziert werden. Die berechneten Checksummen oder Hashwerte werden mit den Metainformationen übertragen und können so im Decoder nachvollzogen und gegengeprüft werden.

Die Kopf- beziehungsweise Fußabschnitte können weitere Metainformationen umfassen. Dazu zählt die Höhe und Breite eines Bildes, also die Anzahl Bildzeilen in einem Bild und Pixel in einer Bildzeile. Ein weiteres vorteilhaftes Beispiel sind Zeilen- und Bildnummern, mit deren Hilfe rasch erkannt wird, wenn ein Frame oder eine Bildzeile fehlt, doppelt oder in falscher Reihenfolge übertragen wurde. Bei manchen fixen Karten, die mehrfach verwendet werden, ist ein Zähler nicht sinnvoll, da sich die Karte und damit der Zählerstand nicht ändert. Stattdessen kann eine Identifikationsnummer benutzt werden, aus der hervorgeht, um welche Karte es sich handelt.

Insgesamt kann erfindungsgemäß zusätzlich zur Absicherung der verschiedenen Datenströme jeweils die Struktur und Geometrie der Bilder sicher übertragen und rekonstruiert werden. Dabei werden weder unbenutzte Codewörter in den Bilddaten noch zusätzliche Steuerleitungen benötigt. Das wäre auch gar nicht immer möglich und würde zumindest einen erhöhten Aufwand im Hinblick auf Schaltungstechnik, Rechenleistung oder FPGA-Ressourcen erfordern.

Nachdem nun zahlreiche Beispiele für Metainformationen erläutert wurden, können auch die verschiedenen Typen von Black Channels BC1, BC2 und BC3 in Figur 2 noch etwas genauer erläutert werden, die sich nämlich vor allem in den Metainformationen unterscheiden, die für den jeweiligen Sonderfall benötigt werden. Durch diese Differenzierungen soll aber nicht die Gemeinsamkeit aus den Augen verloren werden, nämlich die sichere Übertragung per Black Channel mit Überprüfung der Bilddatenstruktur anhand von vorangestellten oder angehängten Metainformationen. Denn die Differenzierungen der Black Channels BC1, BC2 und BC3 hängen stark von der recht konkreten Implementierung in einer Stereokamera 10 nach Figur 2 ab, wohingegen das erfindungsgemäße Absicherungskonzept für Black Channels an sich sehr flexibel und allgemein ist.

In den Black Channels BC1 und BC2 wird eine Struktur wie in Figur 3b mit Fußabschnitten für gleich lange Bildzeilen verwendet. Dagegen nutzt der Black Channel BC3 Kopfabschnitte für unterschiedlich lange Bildzeilen wie in Figur 4, da hier auch Bilder mit komprimierten Zeileninhalten und demnach unterschiedlichen Zeilenlängen übertragen werden sollen. Für eine effiziente Verifikation des Datenstroms in dem Decoder auf der Empfängerseite des Übertragungskanals, die im Falle von BC3 durch Software erfolgt, werden vorzugsweise die Kopfabschnitte der Bildzeilen in einem fixen Raster gespeichert, obwohl die Bildzeilen an sich unterschiedlich lang sind. Das Raster leitet sich beispielsweise von der größtmöglichen Zeilenlänge ab. Die Bildzeilen werden gleichsam auf eine größte gemeinsame Länge mit Dummy-Werten aufgefüllt, etwa mit Nullen oder indem die nicht genutzten Speicherbereiche einfach den vorhandenen Wert behalten. Die Bildzeilen werden somit verkürzt übertragen, so dass hierbei durch die Kompression Bandbreite eingespart wird, nehmen aber im Speicher bewusst den vollen Platz ein, um die Verifikation zu vereinfachen. Denn die Software des Decoders kann nun einfach an den jeweiligen Zeilenanfängen die magischen Zahlen überprüfen und die jeweiligen weiteren Metainformationen auslesen.

Die beiden Black Channels BC1 und BC2 unterscheiden sich voneinander unter anderem dadurch, dass für den Black Channel BC2 kein Bildzähler implementiert wird. Das liegt daran, dass zumindest manche im Speicher 36 abgelegte Karten sich nicht mit den jeweils neu erfassten Rohbildern der Bildsensoren 16a-b ändern, sondern immer wieder der gleiche Speicherbereich ausgelesen wird. Vorzugsweise wird dann in den Metainformationen anstelle eines Bildzählers eine Identifikationsnummer übertragen, um die Karte zu identifizieren. Das ist insbesondere dann von Vorteil, wenn im Betrieb verschiedene Karten durch Änderung der Startadresse der Karte ausgewählt werden. Die Identifikationsnummer dient dann zur Authentifikation der gewünschten Karte. Im Übrigen können Karten, die sich ohnehin im Betrieb oder zumindest für längere Betriebsphasen nicht ändern, auch schon in codierter Form samt Kopf- beziehungsweise Fußabschnitten gespeichert werden, unter Umständen schon im Rahmen einer Kalibrierung während der Produktion oder Einrichtung des Sensors, um den Mehrfachaufwand für die in diesem Fall immer gleiche Codierung einzusparen.

Figur 5 illustriert noch einen weiteren optionalen Codierungsschritt. Bisher wurde anhand verschiedener Ausführungsbeispiele erläutert, wie zunächst vor der Übertragung Metainformationen von einem Encoder 38 hinzugefügt und dann nach der Übertragung auf der Empfängerseite des Übertragungskanals die Datenintegrität in einem Decoder 40 anhand der Metainformationen geprüft wird. Zusätzlich kann noch eine innere Kanalcodierung mit einer weiteren Codierung 42 vor der Übertragung und einer weiteren Decodierung 44 nach der Übertragung ergänzt werden, um die Betriebssicherheit und Verfügbarkeit weiter zu erhöhen. Die innere Kanalcodierung 42, 44 findet also auf einer Ebene innerhalb der abgesicherten Black Channel Kommunikation 38, 40 statt. Für die innere Kanalcodierung 42, 44 können an sich bekannte Protokolle verwendet werden, die insbesondere fehlerkorrigierend sind. Beispiele sind ECC (Error Correcting Codes) im Falle von externem Speicher oder eine FEC (Forward Error Correction). Das innere Protokoll ist nur dafür verantwortlich, nach seinen Möglichkeiten die Übertragungsfehlerrate zu verringern. Die Sicherheit bleibt über die darüber liegende Ebene der erfindungsgemäßen Black-Channel- gewährleistet, in der auch etwaige Fehler des inneren Protokolls auffallen würden.

## Patentansprüche

1. Verfahren zum Übertragen von Bilddaten in einem optoelektronischen Sensor (10), wobei der optoelektronische Sensor (10) mindestens einen Bildsensor (16a-b) und eine Steuer- und Auswertungseinheit (24) beinhaltet und die Bilddaten von dem Bildsensor (16a-b) zu der Steuer- und Auswertungseinheit (24) oder zwischen Bausteinen (32, 34, 36) der Steuer- und Auswertungseinheit (24) übertragen werden, wobei Übertragungsfehler erkannt werden, indem den Bilddaten vor der Übertragung von dem Bildsensor (16a-b) oder einem der Bausteine (32, 34, 36) Metainformationen hinzugefügt und die Metainformationen nach der Übertragung von der Steuer- und Auswertungseinheit (24) überprüft werden, wobei die Bilddaten über eine nicht sichere Kommunikationsverbindung übertragen werden, die Metainformationen den Bilddaten und/oder Teilpaketen der Bilddaten vorangestellt und/oder angehängt werden und die Metainformationen eine Information über die Struktur der Bilddaten aufweisen, **dadurch gekennzeichnet,**
**dass** der Sensor (10) ein Sicherheitssensor für die Überwachung einer Maschine (26) im Sinne einer Sicherheitsnorm für den Personenschutz ist und dass eine sicherheitsgerichtete Reaktion zum Absichern der Maschine (26) ausgelöst wird, wenn die Überprüfung der Metainformationen keine ausreichende Datenintegrität der Bilddaten ergibt.

2. Verfahren nach Anspruch 1,
wobei die nicht sichere Kommunikationsverbindung (BC) ein Black Channel ist.

3. Verfahren nach Anspruch 1 oder 2,
wobei die Bilddaten mindestens zwei Kameraaufnahmen eines Überwachungsbereichs (12) aus versetzter Perspektive aufweisen, die an eine Stereoskopieeinheit (24) zum Erzeugen einer Tiefenkarte nach dem Stereoskopieprinzip übertragen werden.

4. Verfahren nach einem der vorhergehenden Ansprüche,
wobei die Bilddaten innerhalb eines optoelektronischen Sensors (10) von einem Bildsensor (16a-b) zu einem Field Programmable Gate Array, FPGA (32), und/oder von einem FPGA (32) zu einem Mikroprozessor (34) übertragen werden.

5. Verfahren nach einem der vorhergehenden Ansprüche,
wobei die Bilddaten zwischen einem FPGA (32) und/oder Mikroprozessor (34) und einem Speicher (36) übertragen werden.

6. Verfahren nach einem der vorhergehenden Ansprüche,
wobei die Metainformationen von einem Encoder (38) vor der Übertragung als Kopfabschnitt vorangestellt und/oder als Fußabschnitt angehängt werden und wobei ein Decoder (40) Kopfabschnitte und/oder Fußabschnitte prüft.

7. Verfahren nach einem der vorhergehenden Ansprüche,
wobei Metainformationen je Bild und/oder je Bildzeile hinzugefügt werden.

8. Verfahren nach einem der vorhergehenden Ansprüche,
wobei innerhalb der nicht sicheren Kommunikationsverbindung für die eigentliche Übertragung eine zusätzliche Codierung (42) und Decodierung (44) der zu übertragenden Bilddaten samt Metainformationen erfolgt.

9. Verfahren nach einem der vorhergehenden Ansprüche,
wobei die Metainformationen magische Zahlen aufweisen, wobei eine magische Zahl einen wiedererkennbaren Wert bezeichnet, der in den Nutz- oder Bilddaten zumindest in Kombination von Wert und Position nur mit geringer Wahrscheinlichkeit zufällig auftritt.

10. Verfahren nach Anspruch 9,
wobei nach der Übertragung das Vorhandensein und die Position der magischen Zahlen in der erwarteten Struktur überprüft werden.

11. Verfahren nach einem der vorhergehenden Ansprüche,
wobei Metainformationen den Bildzeilen vorangestellt werden und die Bildzeilen für die Übertragung unterschiedliche Längen aufweisen, jedoch nach der Übertragung auf ein festes Raster gleich langer Zeilen aufgefüllt werden.

12. Verfahren nach einem der vorhergehenden Ansprüche,
wobei die Metainformationen einen Prüfwert je Bild und/oder Bildzeile aufweisen.

13. Verfahren nach einem der vorhergehenden Ansprüche,
wobei die Metainformationen eine Bildbreite und/oder Bildhöhe aufweisen.

14. Verfahren nach einem der vorhergehenden Ansprüche,
wobei die Metainformationen einen Bildzeilenzählwert und/oder einen Bildzählwert aufweisen.

15. Sicherer optoelektronischer Sensor (10) mit mindestens einem Bildsensor (16a-b) und einer Steuer- und Auswertungseinheit (24), **dadurch gekennzeichnet, dass** der Sensor (10) zum Ausführen eines Verfahrens nach einem der Ansprüche 1 bis 14 konfiguriert ist.

## Claims

1. A method for transmitting image data in an optoelectronic sensor (10), wherein the optoelectronic sensor (10) includes at least one image sensor (16a-b) and a control and evaluation unit (24), and the image data are transmitted from the image sensor (16a-b) to the control and evaluation unit (24) or between modules (32, 34, 36) of the control and evaluation unit (24), wherein transmission errors are detected by adding meta information to the image data before transmission from the image sensor (16a-b) or one of the components (32, 34, 36) and the control and evaluation unit (24) checking the meta information after transmission, the image data being transmitted via a non-safe communication link, the meta information being prefixed and/or appended to the image data and/or sub packets of the image data, and the meta information comprising information about the structure of the image data,
**characterized in that** the sensor (10) is a safety sensor for monitoring a machine (26) in terms of a safety standard for person protection, and **in that** a safety-related reaction for safeguarding the machine (26) is triggered if the checking of the meta information does not result in sufficient data integrity of the image data.

2. The method according to claim 1,
wherein the non-safe communication link (BC) is a Black Channel.

3. The method according to claim 1 or 2,
wherein the image data comprise at least two camera images of a monitoring area (12) from an offset perspective, which are transmitted to a stereoscopy unit (24) for generating a depth map according to the stereoscopy principle.

4. The method according to any of the preceding claims,
wherein the image data are transferred within an optoelectronic sensor (10) from an image sensor (16a-b) to a field programmable gate array, FPGA (32), and/or from an FPGA (32) to a microprocessor (34).

5. The method according to any of the preceding claims,
wherein the image data are transferred between an FPGA (32) and/or microprocessor (34) and a memory (36).

6. The method according to any of the preceding claims,
wherein the meta information is prefixed by an encoder (38) as a header portion and/or appended as a footer portion prior to the transmission and wherein a decoder (40) checks header portions and/or footer portions.

7. The method according to any of the preceding claims,
wherein meta information is added per image and/or per image line.

8. The method according to any of the preceding claims,
wherein within the non-safe communication connection for the actual transmission an additional coding (42) and decoding (44) of the image data to be transmitted including meta information takes place.

9. The method according to any of the preceding claims,
wherein the meta information comprises magic numbers, a magic number denoting a recognizable value which only occurs randomly with a low probability in the useful data or image data at least in combination of value and position.

10. The method according to claim 9,
wherein after the transfer the presence and position of the magic numbers in the expected structure is checked.

11. The method according to any of the preceding claims,
wherein meta information precedes the image lines and the image lines for the transfer have different lengths, but are filled up after the transfer to a fixed grid of lines of equal length.

12. The method according to any of the preceding claims,
wherein the meta information comprises a check value per image and/or image line.

13. The method according to any of the preceding claims,
wherein the meta information comprises an image width and/or image height.

14. The method according to any of the preceding claims,
wherein the meta information comprises an image line count and/or an image count.

15. A safe optoelectronic sensor (10) having at least one image sensor (16a-b) and a control and evaluation unit (24), **characterized in that** the sensor (10) is configured to carry out a process according to one of claims 1 to 14.

## Revendications

1. Procédé de transmission de données d'image dans un capteur optoélectronique (10), le capteur optoélectronique (10) comprenant au moins un capteur d'images (16a-b) et une unité de commande et d'évaluation (24), et les données d'image étant transmises du capteur d'images (16a-b) à l'unité de commande et d'évaluation (24) ou entre des composants (32, 34, 36) de l'unité de commande et d'évaluation (24), dans lequel des erreurs de transmission sont reconnues en ajoutant des méta-informations aux données d'image avant la transmission depuis le capteur d'images (16a-b) ou depuis l'un des composants (32, 34, 36), et en faisant vérifier les méta-informations par l'unité de commande et d'évaluation (24) après la transmission, les données d'image sont transmises via une liaison de communication non sécurisée, les méta-informations sont placées devant les données d'image et/ou devant des sous-paquets de données d'image et/ou sont annexées à celles-ci/à ceux-ci, et les méta-informations comprennent une information sur la structure des données d'image,
**caractérisé en ce que**
le capteur (10) est un capteur de sécurité pour la surveillance d'une machine (26) dans le sens d'une norme de sécurité pour la protection des personnes, et **en ce qu'**une réaction relative à la sécurité pour la sécurisation de la machine (26) est déclenchée si la vérification des méta-informations n'aboutit pas à une intégrité suffisante des données d'image.

2. Procédé selon la revendication 1,
dans lequel la liaison de communication non sécurisée (BC) est un canal noir (Black Channel).

3. Procédé selon la revendication 1 ou 2,
dans lequel les données d'image comprennent au moins deux prises de vue par caméra d'une zone à surveiller (12) à partir d'une perspective décalée, qui sont transmises à une unité de stéréoscopie (24) pour générer une carte de profondeur selon le principe de la stéréoscopie.

4. Procédé selon l'une des revendications précédentes,
dans lequel les données d'image sont transmises à l'intérieur d'un capteur optoélectronique (10) depuis un capteur d'images (16a-b) à un réseau FPGA (32) (Field Programmable Gate Array) et/ou depuis un réseau FPGA (32) à un microprocesseur (34).

5. Procédé selon l'une des revendications précédentes,
dans lequel les données d'image sont transmises entre un réseau FPGA (32) et/ou un microprocesseur (34) et une mémoire (36).

6. Procédé selon l'une des revendications précédentes,
dans lequel avant la transmission, les méta-informations sont placées devant en tant que partie d'en-tête et/ou sont annexées en tant que partie de pied par un codeur (38), et
un décodeur (40) vérifie les parties d'en-tête et/ou les parties de pied.

7. Procédé selon l'une des revendications précédentes,
dans lequel des méta-informations sont ajoutées par image et/ou par ligne d'image.

8. Procédé selon l'une des revendications précédentes,
dans lequel, au sein de la liaison de communication non sécurisée, pour la transmission proprement dite, on effectue un codage (42) et un décodage (44) supplémentaires des données d'image à transmettre, y comprises les méta-informations.

9. Procédé selon l'une des revendications précédentes,
dans lequel les méta-informations comprennent des nombres magiques, un nombre magique désignant une valeur reconnaissable qui se produit de manière aléatoire avec une probabilité seulement faible dans les données utiles ou dans les données d'image, au moins en combinaison de la valeur et de la position.

10. Procédé selon la revendication 9,
dans lequel la présence et la position des nombres magiques dans la structure attendue sont vérifiées après la transmission.

11. Procédé selon l'une des revendications précédentes,
dans lequel des méta-informations sont placées devant les lignes d'image, et les lignes d'image ont des longueurs différentes pour la transmission, mais sont remplies jusqu'à une trame fixe de lignes de longueur égale après la transmission.

12. Procédé selon l'une des revendications précédentes,
dans lequel les méta-informations présentent une valeur de vérification par image et/ou par ligne d'image.

13. Procédé selon l'une des revendications précédentes,
dans lequel les méta-informations ont une largeur d'image et/ou une hauteur d'image.

14. Procédé selon l'une des revendications précédentes,
dans lequel les méta-informations présentent une valeur de comptage de lignes d'image et/ou une valeur de comptage d'image.

15. Capteur optoélectronique sécurisé (10), comportant au moins un capteur d'images (16a-b) et une unité de commande et d'évaluation (24), **caractérisé en ce que** le capteur (10) est configuré pour mettre en oeuvre un procédé selon l'une des revendications 1 à 14.
